# EUROPEAN PATENT SPECIFICATION

(11) **EP 2 037 147 B1**
(45) Date of publication and mention of the grant of the patent: **18.10.2017**
(21) Application number: 07767684.9
(22) Date of filing: 27.06.2007
(51) Int. Cl.: F16F 7/08, E04H 9/02, F16C 33/12, F16C 33/24, F16F 15/02

(54) **FRICTION DAMPER**
REIBUNGSDÄMPFER
AMORTISSEUR À FRICTION

(30) Priority: 30.06.2006 JP 2006180992
(43) Date of publication of application: 18.03.2009
(73) Proprietor: OILES CORPORATION, Minato-ku Tokyo 105-8584 (JP)
(72) Inventor: SASAKI, Kazuhiko, Ashikaga-shi, Tochigi 326-0327 (JP); MIYAZAKI, Mitsuru, Ashikaga-shi, Tochigi 326-0327 (JP); SHIKI, Kazuaki, Tokyo 105-8584 (JP); NAGASHIMA, Kazuhiro, Tochigi 326-0327 (JP)
(74) Representative: Isarpatent
(86) International application number: PCT/JP2007/062882
(87) International publication number: WO 2008/001804

(56) References cited:
- WO-A2-99/50568
- JP-A- 2001 517 286
- JP-A- 2003 278 828
- JP-A- 2006 038 180
- US-B1- 6 367 601

## Description

### TECHNICAL FIELD

The present invention relates to a friction damper, and more particularly to a friction damper mounted between a pair of structural members of a building structure that relatively displaces with each other when repeated tensile and compressive forces are added thereto due to earthquake or the like and absorbing the energy.

### BACKGROUND ART

As dampers for rapidly attenuating vibration of structures generated by earthquake or the like are there one utilizing plastic deformation of steel bars and lead, one utilizing viscous shear of viscous material, one utilizing friction and so on.

In the dampers utilizing steel bars, when the steel bars greatly deform to cause plastic deformations due to earthquake or the like, it is necessary to consider replacement of the steel bars each time, and when replacing them, it is required to pay attention to a method of releasing residual stress acting on the steel bars.

On the other hand, as for the dampers utilizing lead, there is a threat on environmental pollution, and when utilizing viscous material is utilized, not only long period of time is required for filling work of the viscous material, but also it is necessary to mount seal means capable of securely preventing leakage.

Further, the dampers utilizing frictional force are advantageous in simple construction and easy handling compared with the above-mentioned dampers, and the following ones are known.

For example, a vibration suppression damper described in the patent document 1 comprises: a cylinder body having a connection part connected to a member of a building; a rod with a connection part connected to the other member of the building; a holding cylinder mounted to the rod through a viscoelastic member; a slide member mounted through an elastic repellent member that applies a uniform urging force to an outer periphery of the holding cylinder and urged by the elastic-repellent member in a direction of outer periphery, and on the outer periphery of the slide member is provided a friction member slidingly contact with an inner periphery of the cylinder body.

Moreover, in the patent document 2, an energy absorbing device for a structural member is proposed. The energy absorbing device comprises: a container box formed of an outer frame and an inner frame that are axially slidable with each other; a dice fixed to an inside of either one of the inner frame or the outer frame; a fitting-in rod fixed to the other frame and extending through a hole of the dice in an axial direction of the container box, in which the hole diameter of the dice is set smaller than the outer diameter of the fitting-in rod and the fitting-in rod is a steel rod that is made to pass through the dice and hardened in advance, when a cyclic load of overtension and overcompression more or equal to a prescribed strength acts to a structural member, the energy absorbing device for the structural member absorbs energy while a part of the fitting-in rod passing through the dice deforming.

Further, in the patent document 3, a friction damper is disclosed. The friction damper comprises: a base body; a support member adhered to a long member of the base body and having a throughhole; a rod extending through the throughhole of the support member and relatively movable to the support member in an axial direction of the rod; a friction member having a cylindrical part interposed between the support member and a main body portion of the rod in the throughhole of the support member and fixed to be immobile in relation to an axial movement of the rod relative to the base body; a fastening means provided to the support member to fasten the cylindrical part of the friction member to the main body portion of the rod.

Further, in the patent document 4 is described a slide friction damper. The slide friction damper comprises: an inner cylinder part to which a rubber elasticity part consisting of self-lubricity rubber is adhered and fixed through vulcanization fabrication; an arm part attached to the both ends of the inner cylinder part; an inner cylinder fitting with rubber elasticity body bonded thereto, the rubber elasticity body being press-fitted into an outer cylinder part; the outer cylinder part made of stainless steel as a low friction material; an outer cylinder fitting with a support bar fixed on its outer peripheral surface and protruding in a radial direction thereof; and a cylindrical rubber elastic body part elastically connecting the inner and outer cylinder fittings. US 6 367 601 B1 discloses a friction damper, which has been specifically designed for washing machines or the like, comprising a hollow shell and a rod, coaxially arranged with respect to one another, which define a telescopic construction. The rod is provided with an outer diameter smaller than the inner diameter of the shell and, between the shell and rod, a friction damper element is arranged. The friction damper element comprises at least two friction clamps contacting the surface of the rod and axially spaced from one another, along that portion of the rod which is engaged in the shell.

Patent document 1: Japanese Utility Model Publication Showa 63-115642 gazette
Patent document 2: Japan Patent 3290912 gazette
Patent document 3: Japan Patent Publication 2003-278828 gazette
Patent document 4: Japanese Patent Publication 2004-3563 gazette

### DISCLOSURE OF THE INVENTION

### PROBLEMS TO BE SOLVED BY THE INVENTION

As described above, dampers utilizing various frictional forces exist, although the vibration suppression damper described in the patent document 1 attenuates vibration energy by frictional resistance generated between the inner peripheral surface of the cylinder body and the outer peripheral surface of the friction member urged by the spring, the urging mechanism itself is complicated, in addition to that, a large urging force is required to obtain large frictional resistance force, which causes a problem that the spring becomes too large.

Moreover, the energy absorbing device for structural member described in the patent document 2 absorbs energy by deformation of a portion of the fitting-in rod passing through the dice when the fitting-in rod, which is hardened in advance, passes the hole of the dice smaller than diameter thereof, but special processing was required for the fitting-in rod itself, further when using it, since it was necessary to pay attention to that a difference in resistance force between at initial shock and after slide becomes large, grease, lubrication oil, or the solid lubricant is needed to be applied in advance to an inner peripheral surface of the dice or/and an outer peripheral surface of the fitting-in rod as occasion demands.

On the other hand, the friction damper described in the patent document 3 is invented by the present applicant, and energy is absorbed by the friction between the slide layer made of synthetic resin, which is formed on a face of the base material with net body and is also filled in meshes of the net body, and the rod, and optimal frictional resistance can be obtained by the fastening means, further it is a friction damper with high stability with little difference in resistance force between at initial shock and after slide,.

However, in order to obtain larger resistance force, when larger pressure is applied by the fastening means to the slide member consisting of the slide layer made of synthetic resin, which is formed on a face of the base material with net body and is also filled in meshes of the net body, the slide member deforms since the member consists of base material with net body, which causes a problem that a desired pressure cannot be added.

Moreover, although the slide friction damper described in the patent document 4 attenuates vibration by causing the self-lubricating rubber to contact the metal fittings with the rubber being compressed and through friction generated between the self-lubricating rubber and the metal fitting, since the self-lubricating rubber is used, the frictional force acquired is set small, so that the damper is unsuitable for common structures.

The present invention has been made in consideration of the problems in the above conventional techniques, and the object thereof is to provide a friction damper with simple construction having characteristics that there is little difference in resistance forces between at initial shock and after slide, and it is difficult to deform slide member under large fastening force, as a result, large frictional force can stably be generated.

Further, it is another object of the present invention to provide a damper, even plurality of friction members are connected and incorporated therein, having characteristics that difference in degree of friction among plurality of friction members is considerably little, so that there is no partial abutment and others.

### MEANS FOR SOLVING PROBLEMS

To achieve the above object, the present invention relates to a friction damper, and this damper is characterized by comprising: a cylinder box; a plurality of cylinder members axially fixed in the cylinder box, a clearance formed between an outer peripheral surface of each cylinder member and an inner peripheral surface of the cylinder box; a plurality of slide bearings press-fitted into an inner peripheral surface of each of the cylinder members; and a shaft made of metal, the shaft being axially slidably press-fitted into an inner peripheral surface of the slide bearings; wherein when the cylinder box and the shaft move axially in relation to each other, an outer peripheral surface of the shaft and the inner peripheral surface of the slide bearings frictionally slide in relation to each other to absorb vibration energy.

When the friction damper of the present invention is mounted to an intermediate portion or an end portion of a structural member of a building structure such that the cylinder box and the shaft relatively axially movable with each other, and repeated tensile and compressive forces are added to the structural member of the building structure due to earthquake or the like, the inner peripheral surface of the slide bearing press-fitted into the cylinder member and the outer peripheral surface of the shaft frictionally slide with each other to absorb vibration energy, which provides a friction damper with simple construction and excellent reliability and safety.

In the friction damper of the present invention, the slide bearing includes a multi-layered member in which a metal layer on an outer peripheral surface side, a coat layer on an inner peripheral surface side made of synthetic resin compound for coating the metal layer and a junction layer for joining the metal layer and the coat layer are integrally formed with each other. Since the slide surface against the outer peripheral surface of the shaft made of metal is formed to be synthetic resin compound, adhesion phenomenon between the members are difficult to occur, which makes difference in resistance forces between at initial shock and after slide little. In addition, large fastening force, which is generated when the metal shaft is press-fitted into the inner peripheral surface of the slide bearing, is added to the coat layer of synthetic resin compound as a slide surface, the synthetic resin compound is supported by the junction layer, and further it is difficult to generate deformation in the overall slide bearing due to stiffness of the metal layer, so that stable frictional slides and a desired large frictional force can simultaneously be acquired.

Especially, in case that a damper is used for antiseismic reinforcement construction, sometimes, it may not be clearly grasped the strength of fixed part of an existing structure to which the damper is mounted, so that it is necessary to eliminate unstable factors on the performance of the damper as much as possible so as not to generate an unexpected situation like damage of the fixed part to which the damper is mounted. In this respect, in the friction damper of the present invention, as described above, there is no threat of increase in frictional resistance force due to adhesion on frictional surface, and difference in frictional performance between at initial shock and after slide is little, resulting in excellent reliability and safety.

Further, in the friction damper, the junction layer may be a porous bronze sintered layer. With this, synthetic resin compound as the coat layer can securely be held.

In the friction damper, the synthetic resin compound may be polytetrafluoroethylene resin containing a filler, and as the filler, one or at least two selected from a group consisting of heat-resistant resin, reinforcing fiber, orthophosphate and solid lubricant can be used.

In the friction damper, the slide bearing may be formed by rolling the multi-layered member with the coat layer being inside.

Further, in the friction damper, the slide bearing may have a flange portion at an end portion of a cylindrical bearing portion. Inserting the flange portion between opposing sides of adjacent cylinder members prevents axial movement of the slide bearing when axial vibration is added. In addition, the slide bearing can be extracted out of the cylinder member as occasion demands, so that consumable parts can easily be replaced and it is preferable in maintenance side of the friction damper.

### EFFECT OF THE INVENTION

As described above, with the present invention, it becomes possible to provide a friction damper with simple construction capable of stably generating large frictional force, and so on, since there is little difference in resistance forces between at initial shock and after slide, and it is difficult to deform slide member under large fastening force.

In addition to the above effect, with this invention, in a damper, in which even plurality of friction members are connected and incorporated therein also, it is possible to make difference in degree of friction among plurality of friction members considerably little, which prevents generation of partial abutments.

### THE BEST MODE TO CARRY OUT THE INVENTION

Next, embodiments of the present invention will be explained in detail with reference to figures.

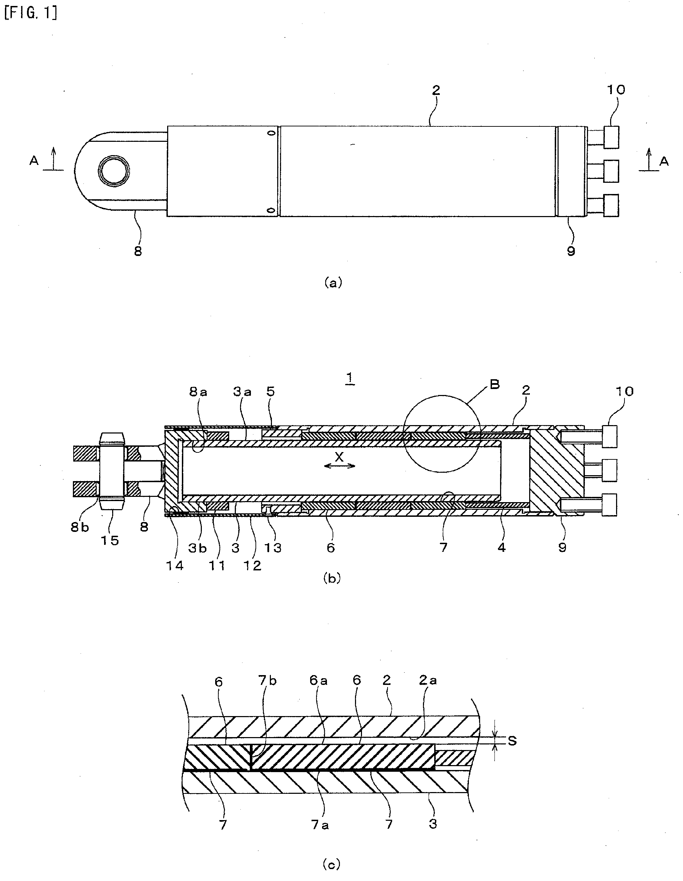

Figure 1 shows a friction damper according to an embodiment of the present invention, and the friction damper 1 comprises: a cylinder (cylinder box) 2 and a rod (shaft) 3 relatively movable with each other in an axial direction X and; three housings (cylinder members) 6 axially fixed in the cylinder 2 by a pressure support pipe 4 and a fastening pipe 5; three slide bearings (hereinafter referred to as "bearings") 7, each of them press-fitted into each inner peripheral surface of the housing 6; and mounting parts 8, 9 mounting the friction damper 1 to construction members or the like of a building structure.

The cylinder 2 is, as shown in Fig. 1(b), integrally formed with a left end portion of the mounting part 9 at a right end portion thereof through screw fastening, and a joint of the two parts is filled with calking agent to improve weatherability. To the mounting part 9 are screwed bolts 10 to mount the part 9 to a building structure.

In the cylinder 2 is disposed the cylindrical pressure support pipe 4 so as to abut a left side face of the mounting part 9. Between this pressure support pipe 4 and the fastening pipe 5 connected through screw to a left end portion of the cylinder 2 are mounted three sets of housings 6 and bearings 7.

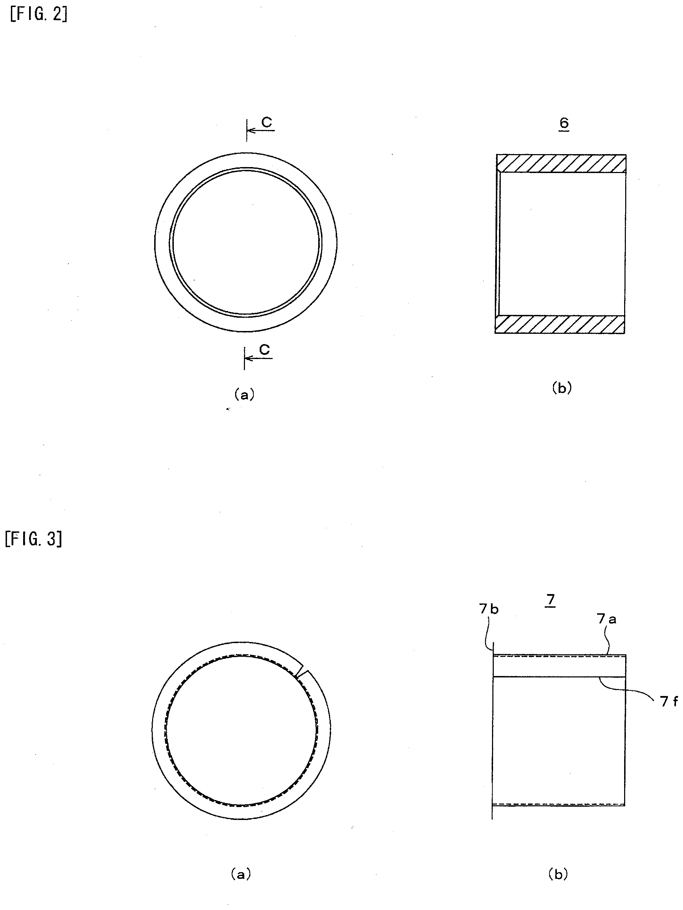

The housing 6 is, as shown in Fig. 2, formed to be cylindrical, and the inner diameter of the bearing 7 press-fitted into the housing 6 is slightly smaller than the outer diameter of the rod 3, which allows the rod 3 to always be tightened.

The bearing 7 is, as shown in Fig. 3, in addition to a cylindrical bearing portion 7a, provided with a flange portion 7b integrally formed with the cylindrical bearing portion 7a, and the cylindrical bearing portion 7a has a slit 7f that is generated when manufacturing the bearing 7 through rolling. This flange portion 7b is, as shown in Fig. 1(c), inserted between opposing sides of adjacent housings 6, and the overall bearing 7 is fixed to be immobile in relation to a movement of the rod 3 relative to the cylinder 2 in the axial direction X.

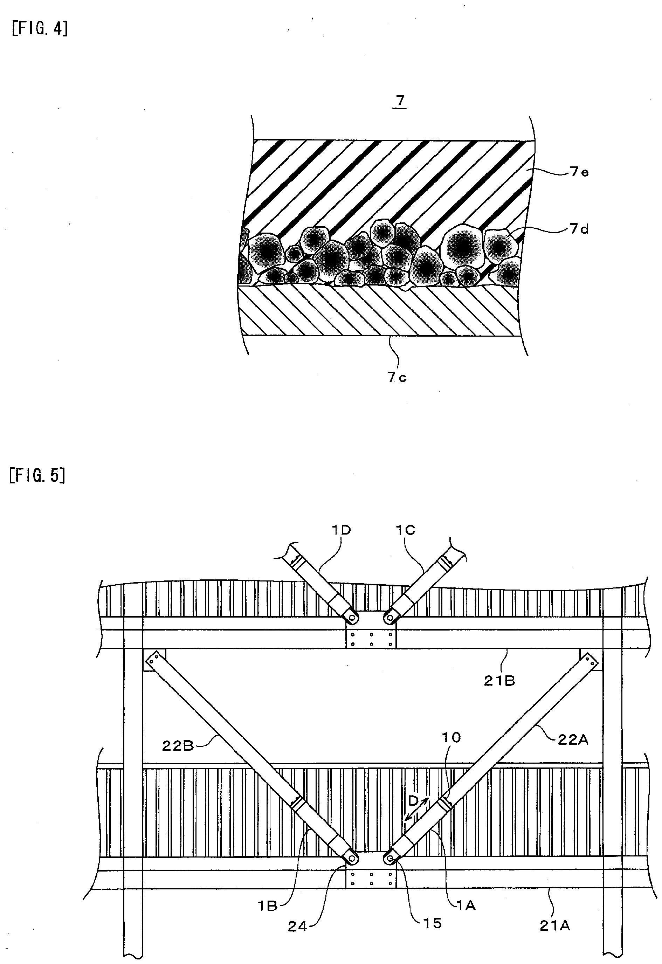

Further, the bearing 7 comprises, as shown in Fig. 4, metal layer (back-metal layer) 7c coated with copper; porous bronze sintered layer (junction layer) 7d with pores that is formed by scattering and spreading bronze powder to one surface of the metal layer 7c and sintering the powder; and a coat layer 7e that is formed by filling the pores in the porous bronze sintered layer 7d and coating the surface of the porous bronze sintered layer 7d with polytetrafluoroethylene resin containing a filler, and the bearing 7 is manufactured by wholly sintering these materials and rolling them by a roll to a prescribed thickness to manufacture a multi-layered member, and further rolling the multi-layered member such that a face on the coat layer 7e side of the multi-layered member is placed on the inner diameter side and another face on the metal layer 7c side is placed on the outer diameter side, further attaching the flange portion 7b to prevent slip-off.

Meanwhile, a synthetic resin compound used for the coat layer of the bearing 7 may be, besides polytetrafluoroethylene resin containing a filler, synthetic resin compound based on polyamide-imide resin.

Further, the filler used for the coat layer of the bearing 7 is made from one or at least two selected from a group consisting of heat-resistant resin, reinforcing fiber, phosphate and solid lubricant, for instance, the heat-resistant resin may be polyimide resin, the reinforcing fiber may be carbon fiber, the phosphate can be calcium phosphate and the solid lubricant may be graphite.

As shown in Fig. 1, the rod 3 is provided with a male screw portion 3b at a left end portion of a cylindrical main body 3a, and the male screw portion 3b is screwed with a female screw portion 8a of the mounting part 8 as well as a nut 11 for preventing slip-off. Outside of the rod 3 adjacent to the nut 11 is mounted a cover 12, and a right end portion of the cover 12 is fixed to the fastening pipe 5 through the bolt 13, and a left end portion of the cover 12 is caused to slidably contact the mounting part 8 through the sealing material 14. In addition, into the hole portion 8b of the mounting part 8 is inserted a pin 15 for mounting the friction damper 1 to a building structure.

Next, a method of assembling the friction damper 1 with the above-mentioned construction will be explained with reference to Fig. 1.

At first, as illustrated in Fig. 1(b), to a right end portion of the cylinder 2 is mounted the mounting part 9 through screw fastening, and between the cylinder 2 and the mounting part 9 is filled calking agent. Then, from a left opening of the cylinder 2 is inserted the pressure support pipe 4 into the cylinder 2, and a right end portion of the pressure support pipe 4 is caused to abut a left end portion of the mounting part 9.

Three housings 6 with inner peripheral surfaces into which the bearings 7 are press-fitted are inserted into the cylinder 2 from the left opening of the cylinder 2, and a rightmost end portion of the rightmost housing 6 is caused to abut the left end portion of the pressure support pipe 4. Under this condition, as shown in Fig. 1(c), there are clearances S between the outer peripheral surfaces 6a of the housings 6 and the inner peripheral surface 2a of the cylinder 2. In addition, the clearances S are different in dimension among the housings 6, for instance, due to processing precisions of the outer peripheral surfaces 6a of the housings 6 and the inner peripheral surface of the cylinder 2. Next, to a left end portion of the cylinder 2 is mounted the fastening pipe 5 through screw fastening.

Meanwhile, after the nut 11 is screwed to the male screw portion 3b of the rod 3, the female screw portion 8a of the mounting part 8 is caused to be screwed to the male screw portion 3b, and the nut 11 is fastened until an left end portion thereof abuts a right end portion of the mounting part 8 to unify the rod 3 and the mounting part 8.

A right end portion of the rod 3 is inserted into the cylinder 2 from the left opening of the cylinder 2, and the rod 3 is moved right while the outer peripheral surface of the rod 3 sliding the inner peripheral surface of the bearing 7 to obtain the condition shown in Fig. 1(b). In this case, even though the bearings 7 and the housings 6 are machined so as to have the same dimensions with each other and press-fittings are performed in the same condition, there is a threat that central positions of the plurality of bearings 7 differ, so that when the rod 3 is press-fitted into the plurality of bearings 7 under the condition that the outer peripheral surfaces of the housings 6 are flush with each other, differences may be generated among the central position of the rod 3 and the central positions of the bearings 7, which may cause partial abutments between the rod 3 and each bearing 7, resulting in a threat of difficulty in press-fitting work of the rod 3 itself.

Therefore, in this invention, as shown in Fig. 1(c), the housings 6 are axially fixed in the cylinder 2 with clearances S between the outer peripheral surfaces of the housings 6 and the inner peripheral surface of the cylinder 2, so that, in the press-fitting work of the rod 3, the rod 3 can be press-fitted under the condition that each of the housings 6 into which the bearings 7 are press-fitted is movable in an direction vertical to the axial direction such that the center of the rod 3 and the centers of the bearing 7 coincide with each other, which allows differences may not be produced among conditions of frictional surfaces between each of the bearing 7 and the rod 3.

Next, to the outside of the rod 3 is mounted a cover 12; the right end portion of the cover 12 is fixed to the fastening pipe 5 through the bolt 13; and the left end portion of the cover 12 is caused to slidably contact the mounting part 8 through the sealing material 14. Finally, the bolts 10 are screwed to the mounting part 9, and the pin 15 is inserted into the hole portion 8b of the mounting part 8 to complete assembling of the friction damper 1.

In this connection, to assemble the friction damper 1, besides the above method, the following method may be used.

In Fig. 1, to the right end portion of the cylinder 2 is mounted the mounting part 9 through screw fastening, and between the cylinder 2 and the mounting part 9 is filled the caulking agent. Then, from the left opening of the cylinder 2 is inserted the pressure support pipe 4 into the cylinder 2, and the right end portion of the pressure support pipe 4 is caused to abut the left end portion of the mounting part 9.

Next, after the nut 11 is screwed to the male screw portion 3b of the rod 3, the female screw portion 8a of the mounting part 8 is screwed to the male screw portion 3b, and the nut 11 is fastened until the left end portion of the nut 11 abuts the right end portion of the mounting part 8 to unify the rod 3 and the mounting part 8.

Then, under the condition that the fastening pipe 5 passes from a right end of the rod 3, from the right end of the rod 3, the rod 3 is inserted while the outer peripheral surface thereof sliding the inner peripheral surface of each of the bearings 7 of three housings 6 with inner peripheral surfaces into which the bearing 7 are press-fitted to dispose the three housings 6 to predetermined positions on the rod 3.

After that, under the condition that the fastening pipe 5 passes through the rod 3 that is integral with the mounting part 8, the rod 3, to which each of the housings 6 into which the bearings 7 are press-fitted are arranged at predetermined positions thereon, is inserted from the left opening of the cylinder 2 until the left end of the pressure support pipe 4 arranged in the cylinder 2 abuts the right end of the housing 6, and the fastening pipe 5 is caused to screw to a screw portion on a left end inner diameter side of the cylinder 2 to fix the three housings 6 so as not to move in an axial direction.

Next, on the outside of the rod 3 is mounted the cover 12, and the right end portion of the cover 12 is fixed to the fastening pipe 5 through the bolt 13, and the left end portion of the cover 12 is caused to slidably contact the mounting part 8 through the sealing material 14. Finally, to the mounting part 9 are screwed the bolts 10, and into the hole portion 8b of the mounting part 8 is inserted the pin 15 to complete assembling of the friction damper 1.

With the above assembling method, it becomes possible to eliminate partial abutments between the rod 3 and each of the bearings 7, that is, it becomes possible not to generate differences in conditions of frictional surfaces between each of the bearings 7 and the press-fitted rod 3.

Next, example of use and motion of the friction damper 1 with the above-mentioned construction will be explained with reference to drawings.

Figure 5 shows a case that the friction damper 1 is used for a building structure, and between a lower beam 21A and an upper beam 21B, the friction dampers 1 (1A to 1D) are mounted between obliquely arranged steel pipe braces 22 (22A, 22B) and brackets 24 and the like. For example, the friction damper 1 (1A) is connected to the bracket 24 by the pin 15 shown in Fig. 1, and is connected to the oblique steel pipe brace 22A by the bolts 10. Meanwhile, for instance, constructing the mounting part 8 rotatable to the rod 3 allows the friction damper 1 to be mounted to the bracket 24 with ease.

Under the condition shown in the figure, due to earthquake or the like, relative displacement is generated between the lower beam 21A and the upper beam 21B, the cylinder 2 of the friction damper 1 (1A) and the rod 3 (refer to Fig. 1) relatively move with each other in a direction indicated by the arrow D to absorb vibration energy. That is, in Fig. 1(b), the cylinder 2 and the rod 3 relatively move with each other in the direction indicated by the arrow X.

During the movement of the rod 3 in relation to the cylinder 2 in the direction indicated by the arrow X, friction between the inner peripheral surfaces of the bearings 7 and the outer peripheral surface of the rod 3 absorbs vibration energy generated in the structure, and vibration of the structure is settled in an early stage.

With this friction damper 1, at the relative movement between the rod 3 and the cylinder 2, as shown in Fig. 1(c), each of the flange portions 7b of the bearings 7 is held by opposing sides of adjacent housings 6, and each of the flange portions 7b is fixed to be immobile in relation to the movement of the rod 3 relative to the cylinder 2 in the direction indicated by the arrow X, which allows each of the bearings 7 to securely be fixed to prevent shift of each bearing 7 in position to each housing 6.

Further, as shown in Fig. 4, the coat layer 7e of the bearing 7 as a slide surface is a layer of polytetrafluoroethylene resin containing a filler, so that the friction damper 1 can be used without lubricant, and is excellent in dimension stability, mechanical strength and heat conductivity, and the coat layer 7e is thin, resulting in lighter and small sized friction damper 1.

Meanwhile, in the above embodiment is used the bearing 7 with multi-layered member comprising: the metal layer 7c of the bearing 7; the porous bronze sintered layer 7d as a junction layer integrally formed on a surface of the 7c; and the coat layer 7e of synthetic resin compound filled in pores of the porous bronze sintered layer 7d and coating the surface of the porous bronze sintered layer 7d, in place of the porous bronze sintered layer 7d as a junction layer for jointing the metal layer 7c and the coat layer 7e, the metal layer and the synthetic resin compound may be jointed by bonding agent when it is strong such that they can be jointed steadily under large fastening force, further they can be jointed directly.

In addition, in the above embodiment, the housing 6 and the bearing 7 are arranged three by three, that is, three sets of the housings 6 and the bearings 7 are disposed, the both may be arranged one by one, and two or four sets or more may be disposed.

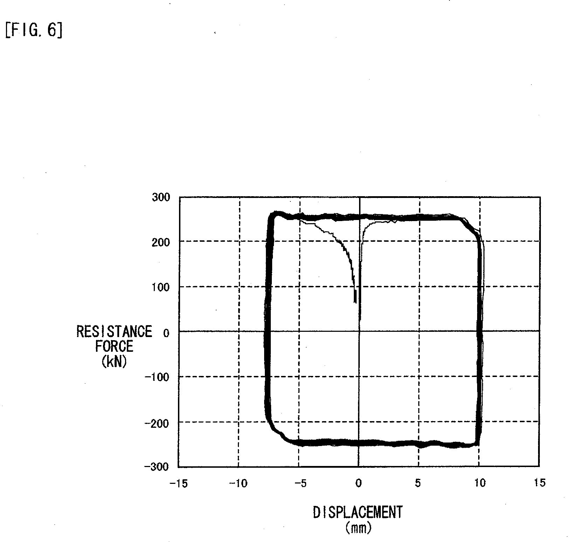

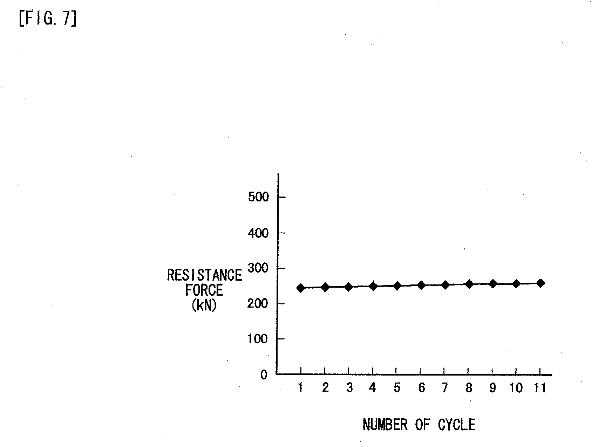

Next, example of test on the friction damper 1 will be explained with reference to Figs. 6 and 7.

Displacement and resistance force of the rod 3 were measured when the cylinder 2 of the friction damper 1 with the construction shown in Fig. 1 was fixed and the rod 3 was caused to axially move in relation to the cylinder 2. Here, as the bearing 7 was used a polytetrafluoroethylene resin multi-layered member bearing with back metal comprising a metal layer, porous bronze sintered layer as a junction layer and a polytetrafluoroethylene resin as a coat layer, in which the rod 3 of 190.7mm in outer diameter and 1350mm in length was used and a high speed testing machine capable of applying up to 3000 kN was used. The result is shown in Fig. 6.

In the figure, the axis of abscissas shows axial slide displacement (mm) of the rod 3, and the axis of ordinates shows resistance force (kN) required to slide the rod 3, and the graph is a hysteresis when the slides of the rod 3 are repeated eleven times. With the graph, it is understood that there is little difference between resistance forces at initial shock and that after slide, and almost the same resistance force is added each time even the slides are repeated.

Figure 7 shows the change in resistance force in each cycle at the above test. With the graph, it is understood that the resistance force in each cycle is almost the same regardless of the number of times that the slides are repeated.

### BRIEF EXPLANATION OF DRAWINGS

[Figure 1] A figure showing a friction damper according to an embodiment of the present invention, in which (a) is an overall front view; (b) is a cross-sectional view of (a) taken along the line A-A; and (c) is an enlarged view of B portion of (b).
[Figure 2] A figure showing a housing of the friction damper shown in Fig. 1, in which (a) is a front view, and (b) is a cross-sectional view of (a) taken along the line C-C.
[Figure 3] A figure showing a bearing of the friction damper shown in Fig. 1, in which (a) is a front view, and (b) is a side view.
[Figure 4] A detail cross-sectional view of the friction damper shown in Fig. 3.
[Figure 5] A schematic view showing an example of use of the friction damper shown in Fig. 1.
[Figure 6] A hysteresis curve of a friction damper according to the present invention.
[Figure 7] A graph showing resistance force and applied vibration cycle of a friction damper according to the present invention.

### EXPLANATION OF SIGNALS

1(1A∼1D) friction damper
2 cylinder
2a inner peripheral surface
3 rod
3a main body portion
3b male screw portion
4 pressure support pipe
5 fastening pipe
6 housing
6a outer peripheral surface
7 bearing
7a bearing portion
7b flange portion
7c metal layer
7d porous bronze sintered layer
7e coat layer
7f slit
8 mounting part
8a female screw portion
8b hole portion
9 mounting part
10 bolt
11 nut
12 cover
13 bolt
14 sealing material
15 pin
21A lower beam
21B upper beam
22(22A, 22B) steel pipe brace
24 bracket
S clearance

## Claims

1. A friction damper comprising:
a cylinder box (2);
a plurality of cylinder members (6) axially fixed in said cylinder box (2), a plurality of slide bearings (7), each slide bearing (7) being press-fitted into an inner peripheral surface of a respective one of said plurality of peripheral surface of cylinder members (6); and
a shaft (3) made of metal, said shaft (3) being axially slidably press-fitted into an inner peripheral surface of said slide bearings (7);
wherein when the cylinder box (2) and the shaft (3) move axially in relation to each other, an outer peripheral surface of said shaft (3) and the inner peripheral surface of said slide bearings (7) frictionally slide in relation to each other to absorb vibration energy,
**characterized in that** a clearance (S) is formed between said outer peripheral surface of said cylinder members (6) and an inner peripheral surface (2a) of said cylinder box (2).

2. The friction damper as claimed in claim 1, wherein said slide bearings (7) each include a multi-layered member in which a metal layer (7c) on an outer peripheral surface side, a coat layer (7e) on an inner peripheral surface side made of synthetic resin compound for coating said metal layer (7c) and a junction layer (7d) for joining the metal layer (7c) and the coat layer (7e) are integrally formed with each other.

3. The friction damper as claimed in claim 2, wherein said junction layer (7d) is a porous bronze sintered layer.

4. The friction damper as claimed in claim 2 or 3, wherein said synthetic resin compound is polytetrafluoroethylene resin containing a filler.

5. The friction damper as claimed in claim 4, wherein said filler is one or at least two selected from a group consisting of heat-resistant resin, reinforcing fiber, phosphate and solid lubricant.

6. The friction damper as claimed in one of claims 2 to 5, wherein said slide bearings (7) are formed by rolling the multi-layered member with the coat layer (7e) being inside.

7. The friction damper as claimed in one of claims 1 to 6, wherein said slide bearings (7) having a flange portion (7b) at an end portion of a cylindrical bearing portion (7a).

## Patentansprüche

1. Reibungsdämpfer, umfassend:
einen Zylinderkasten (2);
mehrere Zylinderelemente (6), die axial in dem Zylinderkasten (2) fixiert sind,
mehrere Gleitlager (7), wobei jedes Gleitlager (7) in eine innere Umfangsfläche eines jeweiligen der mehreren Zylinderelemente (6) pressgepasst ist; und
eine Welle (3), die aus Metall hergestellt ist, wobei die Welle (3) axial verschiebbar in eine innere Umfangsfläche der Gleitlager (7) pressgepasst ist;
wobei, wenn sich der Zylinderkasten (2) und die Welle (3) axial in Bezug aufeinander bewegen, sich eine äußere Umfangsfläche der Welle (3) und die innere Umfangsfläche der Gleitlager (7) reibschlüssig in Bezug aufeinander verschieben, um Schwingungsenergie zu absorbieren,
**dadurch gekennzeichnet, dass** ein Abstand (S) zwischen der äußeren Umfangsfläche der Zylinderelemente (6) und einer inneren Umfangsfläche (2a) des Zylinderkastens (2) gebildet ist.

2. Reibungsdämpfer nach Anspruch 1, wobei die Gleitlager (7) jeweils ein mehrschichtiges Element aufweisen, in dem eine Metallschicht (7c) auf einer äußeren Umfangsflächenseite, eine Deckschicht (7e) auf einer inneren Umfangsflächenseite, die aus einer synthetischen Harzverbindung zum Beschichten der Metallschicht (7c) hergestellt ist, und eine Verbindungsschicht (7d) zum Verbinden der Metallschicht (7c) mit der Deckschicht (7e) einstückig miteinander hergestellt sind.

3. Reibungsdämpfer nach Anspruch 2, wobei die Verbindungsschicht (7d) eine poröse Bronze-gesinterte Schicht ist.

4. Reibungsdämpfer nach Anspruch 2 oder 3, wobei die synthetische Harzverbindung ein Polytetrafluorethylen-Harz ist, das einen Füllstoff enthält.

5. Reibungsdämpfer nach Anspruch 4, wobei der Füllstoff einer oder mindestens zwei ist, die aus einer Gruppe ausgewählt sind bestehend aus hitzebeständigem Harz, Verstärkungsfaser, Phosphat und festem Schmiermittel.

6. Reibungsdämpfer nach einem der Ansprüche 2 bis 5, wobei die Gleitlager (7) durch Walzen des mehrschichtigen Elements mit der Deckschicht (7e), die im Inneren ist, gebildet sind.

7. Reibungsdämpfer nach einem der Ansprüche 1 bis 6, wobei die Gleitlager (7) einen Flanschabschnitt (7b) an einem Endabschnitt eines zylindrischen Lagerabschnitts (7a) haben.

## Revendications

1. Amortisseur à frottement comprenant:
un compartiment de cylindre (2);
une pluralité d'éléments de cylindre (6) fixés axialement dans ledit compartiment de cylindre (2),
une pluralité de paliers à glissement (7), chaque palier à glissement (7) étant placé par pression dans une surface périphérique intérieure d'une de ladite pluralité respective des éléments de cylindre (6); et
un arbre (3) en métal, ledit arbre (3) étant placé par pression à coulissement axial dans une surface périphérique intérieure desdits paliers à glissement (7);
dans lequel, quand le compartiment de cylindre (2) et
l'arbre (3) se déplacent axialement l'un par rapport à l'autre, une surface périphérique extérieure dudit arbre (3) et la surface périphérique intérieure desdits paliers à glissement (7) glissent par frottement l'un par rapport à l'autre pour absorber l'énergie vibratoire,
**caractérisé en ce qu'**un espace libre (S) se forme entre ladite surface périphérique extérieure desdits éléments de cylindre (6) et une surface périphérique intérieure (2a) dudit compartiment de cylindre (2).

2. Amortisseur à frottement selon la revendication 1, dans lequel lesdits paliers à glissement (7) comprennent chacun un élément multi-couche dans lequel une couche de métal (7c) sur un côté de la surface périphérique extérieure, une couche de revêtement (7e) sur un côté de la surface périphérique intérieure, fabriquée en composition de résine synthétique pour revêtir ladite couche de métal (7c), et une couche de joint (7d) pour joindre la couche de métal (7C) et la couche de revêtement (7e), sont formées d'un seul tenant les unes avec les autres.

3. Amortisseur à frottement selon la revendication 2, dans lequel ladite couche de joint (7d) est une couche poreuse frittée en bronze.

4. Amortisseur à frottement selon la revendication 2 ou 3, dans lequel ladite composition de résine synthétique est une résine de polytétrafluoroéthylène contenant une charge.

5. Amortisseur à frottement selon la revendication 4, dans lequel ladite charge est l'une ou au moins deux des sélectionnées parmi le groupe composé des suivants:
résine thermo-résistante, fibres renforcement, phosphate et lubrifiant solide.

6. Amortisseur à frottement selon l'une des revendications 2 à 5, dans lequel lesdits paliers à glissement (7) sont formés en roulant l'élément multicouche, la couche de revêtement (7e) étant à l'intérieur.

7. Amortisseur à frottement selon l'une des revendications 1 à 6, dans lequel lesdits paliers à glissement (7) présentent une partie à bride (7b) sur une partie d'extrémité d'une partie de palier cylindrique (7a).
